# EUROPÄISCHE PATENTSCHRIFT

(11) **EP 0 596 282 B1**
(45) Veröffentlichungstag und Bekanntmachung des Hinweises auf die Patenterteilung: **08.04.1998**
(21) Anmeldenummer: 93116434.7
(22) Anmeldetag: 11.10.1993
(51) Int. Cl.: G11B 23/28

(54) **Verfahren zur Sicherung eines Videorekorders gegen unberechtigte Benutzung und Einrichtung zur Durchführung des Verfahrens**
Method of securing a video recorder against authorized use and device for performing the method
Procédé de protection d'un appareil d'enregistrement vidéo contre l'utilisation non-autorisée et dispositif pour effectuer le procédé

(30) Priorität: 31.10.1992 DE 4236872
(43) Veröffentlichungstag der Anmeldung: 11.05.1994
(73) Patentinhaber: GRUNDIG Aktiengesellschaft, 90762 Fürth (DE)
(72) Erfinder: Kornhaas, Wolfgang, GRUNDIG E.M.V., D-90748 Fürth (DE)

(56) Entgegenhaltungen:
- EP-A- 0 153 602
- DE-A- 4 217 207
- US-A- 5 040 210
- US-A- 5 146 495

## Beschreibung

Die Erfindung betrifft ein Verfahren zur Sicherung gegen unberechtigte Benutzung eines Videorekorders und/oder für mit diesem Videorekorder verwendete Magnetbandkassetten und einen Videorekorder mit einer nach diesem Verfahren arbeitenden Einrichtung.

Oftmals wünschen die Benutzer von Videorekordern, daß die von ihnen angefertigten Aufzeichnungen nicht allgemein zugänglich sind. Es soll also nur berechtigten Personen möglich sein, diese Aufnahmen zu betrachten. Dies ist z.B. dann wünschenswert, wenn die Aufnahmen für Kinder ungeeignet sind.

Um die Betrachtung derartiger Aufnahmen durch unberechtigte Personen zu verhindern, verfügen viele bekannte Videorekorder über sogenannte Zahlenschlösser. Bei dem Zahlenschloß handelt es sich um einen Geheimcode, der mittels der Bedieneinheit des Videorekorders eingegeben werden kann, woraufhin die Benutzung des Videorekorders so lange gesperrt bleibt, bis der Geheimcode erneut eingegeben wird. Ein Videorekorder mit einem derartigen Zahlenschloß ist beispielsweise der von der Firma GRUNDIG hergestellte Videorekorder VS 960 VPT. Es ist auch bekannt, derartige Zahlenschlösser als Schutz gegen Diebstahl einzusetzen.

Die Verwendung von Zahlenschlössern hat aber den Nachteil, daß der Videorekorder nach der Eingabe des Geheimcodes vollständig gesperrt ist. Bis zur erneuten Eingabe des Geheimcodes kann der Videorekorder nicht genutzt werden. Soll die Benutzung des Videorekorders darüber hinaus für eine größere Benutzergruppe möglich sein, so muß jedem der Benutzer der Geheimcode bekannt sein, wodurch eine wirksame Geheimhaltung des Geheimcodes erschwert wird. EP-A-153602 beschreibt eine Einrichtung nach dem Oberbegriff des Anspruchs 6. Aufgabe der Erfindung ist es, einen Videorekorder anzugeben, der eine bessere und flexiblere Sicherung gegen unberechtigte Benutzung ermöglicht.

Erfindungsgemäß wird diese Aufgabe durch die Gegenstände der Ansprüche 1 und 6 gelöst. Es wird bei jeder Aufzeichung auf die Magnetbandkassetten ein Sicherungscode automatisch mitaufgezeichnet, der vom Benutzer festgelegt und im Videorekorder abgespeichert ist. Vor jeder Bearbeitung einer Magnetbandkassette mit dem Videorekorder werden die Sicherungscodes auf der Magnetbandkassette und im Videorekorder verglichen und bei Übereinstimmung wird die Bearbeitung freigegeben. Weist die Magnetbandkassette einen abweichenden Sicherungscode auf, so wird die Bearbeitung durch manuelle Eingabe des im Videorekorder gespeicherten Sicherungscodes möglich.

Der besondere Vorteil der Erfindung ist es, daß durch das Vorhandensein des Sicherungscodes sowohl im Videorekorder als auch auf den Magnetbandkassetten die Benutzung des an sich gesperrten Videorekorders für jeden Benutzer auch ohne Kenntnis des Sicherungscodes möglich ist, solange er über Magnetbandkassetten verfügt, die den entsprechenden Sicherungscode aufweisen. Somit wird einerseits eine Sicherung gegen Diebstahl erreicht und andererseits die Benutzung des Videorekorders einer großen Gruppe von Benutzern ermöglicht, ohne die Geheimhaltung des Sicherungscodes zu gefährden.

Eine Weiterbildung der erfindungsgemäßen Lösung wird erreicht, indem der Sicherungscode auf den Magnetbandkassetten um einen zusätzlichen Sicherungscode erweitert wird. Mit dem zusätzlichen Sicherungscode ist es möglich, alle Betriebsarten oder nur eine bestimmte Auswahl, wie Aufzeichung und/oder Wiedergabe, zu sperren. Dies ist für eine ganze Magnetbandkassette oder nur für bestimmte Abschnitte der Magnetbandkassette möglich. Eine Freigabe der so gesperrten Betriebsarten kann nur über die manuelle Eingabe des im Videorekorder gespeicherten oder auf der Magnetbandkassette aufgezeichneten Sicherungscodes erfolgen.

Die erfindungsgemäße Weiterbildung weist den Vorteil auf, daß durch den zusätzlichen Sicherungscode auf den Magnetbandkassetten die Benutzung des Videorekorders zusammen mit der so gesicherten Magnetbandkassette nur in einer bestimmten Betriebsart möglich ist, bzw. daß eine bestimmte Betriebsart ausgeschlossen ist. Es kann beispielsweise zweckmäßig sein, die Betriebsart Aufzeichnung zu sperren, um die auf der Magnetbandkassette vorhandene Aufzeichnung zu schützen.

In einer weiteren, Ausführungsform sieht die Erfindung eine Betriebsart vor, welche die Bearbeitung beliebiger Magnetbandkassetten, als auch ohne oder mit nicht übereinstimmendem Sicherungscode, ermöglicht. In dieser Betriebsart wird auf den Vergleich zwischen dem im Videorekorder gespeicherten und dem auf der Magnetbandkassette aufgezeichneten Sicherungscode verzichtet. Die Überprüfung auf die zusätzlichen Sicherungscodes erfolgt aber weiterhin.

Dadurch wird es in vorteilhafter Weise möglich, Benutzern ohne Kenntnis des Sicherungscodes die Benutzung des Videorekorders mit beliebigen Magnetbandkasseten zu ermöglichen. Der Schutz einzelner Magnetbandkassetten durch zusätzliche Sicherungscodes bleibt aber erhalten.

Eine weitere erfindungsgemäße Lösung umfaßt darüber hinaus eine Betriebsart, die es ermöglicht, nachträglich Sicherungscodes und/oder zusätzliche Sicherungscodes auf Magnetbandkassetten aufzuzeichnen oder diese abzuändern.

Der Vorteil einer nachträglichen Änderung oder Aufzeichung ist darin zu sehen, daß Magnetbandkassetten, die nicht mit einem erfindungsgemäßen Videorekorder aufgezeichnet wurden, nachträglich mit den Sicherungscodes versehen werden können, bzw. daß bei Bedarf der ursprüngliche Sicherungscode und/oder die zusätzlichen Sicherungscodes abgeändert werden können.

Nachfolgend wird die Erfindung im Zusammenhang mit einem Videorekorder, der über eine VITC-Einrichtung verfügt, näher beschrieben.

VITC bedeutet Vertical Interval Time Code. Dieser Code ist in der Norm IEC 461 festgelegt und besteht aus einem 90-Bit-Wort, das in die vertikale Austastlücke, Bildzeilen 6-22 bzw. 319-335, eingeschrieben wird. Der Code enthält Zeitangaben in Stunden, Minuten, Sekunden und Einzelbildern, Kontrollabfragen zur Datensicherung und benutzerspezifische Daten. Erfindungsgemäß werden im Bereich der benutzerspezifischen Daten die Sicherungscodes aufgezeichnet. Die Erfindung wird dadurch aber nicht auf die Verwendung eines Codes entsprechend VITC beschränkt, eine Aufzeichnung der Sicherungscodes in einer davon abweichenden Art und Weise ist ebenso möglich.

Die Erfindung geht von einem bekannten Videorekorder aus, der neben einer Bedieneinheit, beispielsweise einer Fernbedienung, einem Mikrocomputer zur Steuerung und einer VITC-Einrichtung zusätzlich einen nichtflüchtigen, beschreibbaren Speicher aufweist. Derartige Speicher sind in vielen Videorekordern bereits vorhanden. Bei der ersten Inbetriebnahme des Videorekorders kann vom Benutzer ein Sicherungscode eingegeben werden, der in den nichtflüchtigen Speicher geschrieben wird. Der Sicherungscode kann beispielsweise aus mehreren alphanumerischen Zeichen, die mittels der Bedieneinheit eingegeben werden, bestehen. Er wird danach bei jeder Aufzeichnung automatisch auf die jeweils verwendete Magnetbandkassette aufgezeichnet. Wird eine Magnetbandkassette in den Videorekorder eingelegt, so löst der Mikrocomputer einen Initialisierungslauf aus und vergleicht den auf der Magnetbandkassette aufgezeichneten und den im Videorekorder gespeicherten Sicherungscode. Bei Übereinstimmung der Sicherungscodes wird die Bearbeitung der Magnetbandkassette freigegeben. Im anderen Fall erfolgt eine Anzeige mittels einer Anzeigeinrichtung des Videorekorders oder mittels des am Videorekorder angeschlossenen Bildschirms, daß die Sicherungscodes nicht übereinstimmen, bzw. daß kein Sicherungscode auf der Magnetbandkassette gefunden wurde. Gleichzeitig kann eine Aufforderung erfolgen, den richtigen Sicherungscode mittels Bedieneinrichtung einzugeben. Gibt der Benutzer den im Videorekorder gespeicherten Sicherungscode ein, wird die Bearbeitung der Magnetbandkassette freigegeben, andernfalls wird die Magnetbandkassette ausgeworfen und eine Fehlermeldung angezeigt.

Neben der Speicherung eines Sicherungscodes im nichtflüchtigen Speicher des Videorekorders ist es auch möglich, mehrere Sicherungscodes abzuspeichern. Dies hat den Vorteil, daß mehrere Benutzer voneinander unabhängige Sicherungscodes verwenden können. Bei Verwendung mehrerer Sicherungscodes ist es aber sinnvoll, die Abspeicherung weiterer Sicherheitscodes nur dann zuzulassen, wenn mindestens ein bereits zuvor abgespeicherter Sicherheitscode manuell eingegeben wird. Anderenfalls wäre die Sicherung gegen unberechtigte Benutzung ohne weiteres zu umgehen.

Durch die Verwendung zusätzlicher Sicherungscodes ist die gezielte Sperrung oder Freigabe einzelner oder aller Betriebsarten des Videorekorders möglich. Beispielsweise können Wiedergabe oder Aufzeichnung gesperrt werden. Eine Freigabe der durch die zusätzlichen Codes gesperrten Betriebsarten kann durch die Eingabe des im Videorekorder gespeicherten Sicherungscodes erreicht werden. Die zusätzlichen Sicherungscodes werden bei einer Aufnahme automatisch zusammen mit den Sicherungscodes aufgezeichnet. Es können einzelne Abschnitte der Magnetbandkassetten mit den zusätzlichen Codes versehen werden oder die ganze Magnetbandkassette. Bei einer späteren Bearbeitung einer Magnetbandkassette werden die Sicherungscodes ständig ausgewertet und bei Auftreten eines zusätzlichen Sicherungscodes wird die entsprechende Betriebsart gesperrt.

Ist der Wiedergabebetrieb gewählt und wird der zusätzliche Sicherungscode auf der Magnetbandkassette erkannt, der den Wiedergabebetrieb sperrt, wird die Wiedergabe nicht gestartet, oder sie wird unterbrochen. Auf dem Bildschirm oder der Anzeigeeinrichtung wird eine entsprechende Meldung ausgegeben und es wird zur Eingabe des Sicherungscodes aufgefordert. Wird der Sicherungscode nicht innerhalb einer gewissen Zeitspanne eingegeben oder wird ein falscher Sicherungscode eingegeben, wird vom Mikrocomputer die Bearbeitung abgebrochen und die Magnetbandkassette wird ausgeworfen.

Ist der Aufnahmebetrieb gewählt und wird der zusätzliche Sicherungscode erkannt, der die Aufnahme sperrt, wird die Aufzeichnung nicht gestartet, oder sie wird unterbrochen.

Es wird eine entsprechende Meldung ausgegeben und der Benutzer wird aufgefordert den Sicherungscode einzugeben. Wird der Sicherungscode nicht innerhalb einer gewissen Zeitspanne eingegeben oder wird ein falscher Sicherungscode eingegeben, wird vom Mikrocomputer die Bearbeitung abgebrochen und die Magnetbandkassette wird ausgeworfen. Wurde ein mit dem im Videorekorder gespeicherten Sicherungscode übereinstimmender Code eingegeben, erfolgt, gesteuert durch den Mikrocomputer, eine Aufnahmeabfrage. Dabei wird durch den Benutzer festgelegt, ob die Aufnahme wiedergabe- oder aufnahmegeschützt sein soll, ob die Magnetbandkassette eine Numerierung für ein Archivsystem erhalten soll, oder ob ein Sicherungscode aufgezeichnet werden soll, der vom im Videorekorder gespeicherten Sicherungscode abweicht. Letzteres kann beispielsweise für Aufnahmen wichtig sein, die mit einem anderen Videorekorder wiedergegeben werden sollen. Die Änderung des Sicherungscodes wirkt sich aber nur auf den aufzuzeichnenden Sicherungscode aus. Der im nichtflüchtigen Speicher des Videorekorders gespeicherte Sicherungscode bleit unverändert, da seine Änderung normalerweise nicht sinnvoll ist, weil ansonsten die Sicherungscodes der bisher aufgezeichneten Magnetbandkassetten nicht mehr mit ihm übereinstimmen. Nachdem die Aufnahmeabfrage beendet ist wird die Aufzeichnung gestartet und die VITC-Einrichtung erzeugt und zeichnet die entsprechend der Aufnahmeabfrage festgelegten Codes auf.

Neben der bisher beschriebenen Verwendung von Magnetbandkassetten, die einen Sicherungscode aufweisen, der gleich dem Sicherungscode im Videorekorder ist, ist eine weitere Betriebsart vorgesehen, welche die Bearbeitung beliebiger Magnetbandkassetten ermöglicht. Es können also auch Magnetbandkassetten bearbeitet werden, die keinen oder einen abweichenden Sicherungscode aufweisen. Damit die Sicherung gegen unberechtigte Benutzung des Videorekorders nicht umgangen werden kann, ist es sinnvoll, die Auswahl dieser Betriebsart von der manuellen Eingabe des im Videorekorder gespeicherten Sicherungscodes abhängig zu machen. In der letztgenannten Betriebsart können beliebige Magnetbandkassetten, unabhängig vom Sicherungscode der Magnetbandkassetten, bearbeitet werden. Während der Bearbeitung werden allerdings die auf der jeweiligen Magnetbandkassette vorhandenen zusätzlichen Sicherungscodes in der oben beschriebenen Weise berücksichtigt. Außerdem kann es in dieser Betriebsart sinnvoll sein, die Freigabe der durch die zusätzlichen Sicherungscodes gesperrten Betriebsarten neben der Eingabe des im Videorekorder gespeicherten Sicherungscodes auch oder nur durch die Eingabe des auf der jeweiligen Magnetbandkassette aufgezeichneten Sicherungscodes bewirken zu können.

Neben den bisher beschriebenen Betriebsarten kann außerdem eine Betriebsart vorgesehen sein, die Änderungen oder nachträgliches Aufzeichnen von Sicherungscodes und/oder zusätzlichen Sicherungscodes ermöglicht. Vom Mikrocomputer werden dabei die Sicherungscodes verglichen und bei Nichtübereinstimmung wird der Benutzer zur Eingabe des im Videorekorder gespeicherten Sicherungscodes aufgefordert.

Wurde ein falscher Code eingegeben, wird die Bearbeitung abgebrochen und die Magnetbandkassette ausgeworfen. Stimmen die Sicherungscodes überein, bzw. wurde der richtige Code eingegeben, kann der Benutzer die gewünschte Änderung auswählen. Geändert werden können der Timecode, der Sicherungscode, die zusätzlichen Sicherungscodes und die Numerierung der Magnetbandkassette für das Archivsystem. Wurden beim Initialisierungslauf keine Codes nach VITC auf der Magnetbandkassette festgestellt, erfolgt automatisch die nachträgliche Aufzeichnung des Sicherungscodes und der gewählten anderen Codes.

Die Verarbeitung von Codes nach VITC, insbesondere die nachträgliche Aufzeichnung derartiger Codes, wird in der nicht vorveröffentlichten deutschen Patentanmeldung P 42 17 207.1 der Anmelderin näher beschrieben.

## Patentansprüche

1. Verfahren zur Sicherung gegen unberechtigte Benutzung eines Videorekorders und/oder mit diesem Videorekorder verwendeter Magnetbandkassetten, bei dem ein vom Benutzer eingegebener alphanumerischer Sicherungscode im Videorekorder gespeichert ist,
bei dem der Sicherungscode bei jeder Aufzeichnung mit auf die verwendeten Magnetbandkassetten aufgezeichnet wird, daß vor jeder Bearbeitung der Magnetbandkassetten der auf den Magnetbandkassetten aufgezeichnete Sicherungscode mit dem im Videorekorder gespeicherten Sicherungscode verglichen wird und die weitere Bearbeitung nur freigegeben wird, falls die Sicherungscodes übereinstimmen und daß bei Nichtübereinstimmung oder Fehlen des Sicherungscodes auf der Magnetbandkassette die weitere Bearbeitung durch die manuelle Eingabe des im Videorekorder gespeicherten Sicherungscodes ermöglicht wird.

2. Verfahren nach Anspruch 1,
**dadurch gekennzeichnet**,
daß ein zusätzlicher Sicherungscode auf die Magnetbandkassetten aufgezeichnet werden kann, der bewirkt, daß bestimmte oder alle Betriebsarten des Videorekorders gesperrt werden, daß der zusätzliche Sicherungscode für die gesamte Magnetbandkassette oder nur für einzeln auswählbare Abschnitte der Magnetbandkassette Gültigkeit hat, daß vor und während jeder Bearbeitung der Magnetbandkassetten eine Überprüfung auf Vorhandensein des zusätzlichen Sicherungscodes erfolgt, und daß die durch den zusätzlichen Sicherungscode gesperrten Betriebsarten durch manuelle Eingabe des im Videorekorder gespeicherten Sicherungscodes freigegeben werden können.

3. Verfahren nach Ansprucn 2,
**dadurch gekennzeichnet,**
daß eine Betriebsart vorgesehen ist, bei der der Vergleich der Sicherungscodes zu Beginn einer Bearbeitung unterbleibt, so daß Magnetbandkassetten ohne oder mit nicht übereinstimmendem Sicherungscode bearbeitet werden können, und daß die durch den zusätzlichen Sicherungscode gesperrten Betriebsarten durch manuelle Eingabe des im Videorekorder oder auf der Magnetbandkassette gespeicherten Sicherungscodes freigegeben werden können.

4. Verfahren nach Anspruch 2 oder 3,
**dadurch gekennzeichnet,**
daß es sich bei den durch die zursätzlichen Sicherungscodes sperrbaren Betriebsarten des Videorekorders um Aufzeichnung und/oder Wiedergabe handelt.

5. Verfahren nach einem der Anspruche 1 bis 4,
**dadurch gekennzeichnet**
daß der Sicherungscode und/oder die zusätzlichen Sicherungscodes nachträglich auf die Magnetbandkassetten aufgezeichnet oder geändert werden können, wobei eine Änderung nur nach der manuellen Eingabe des im Videorekorder oder auf der Magnetbandkassette gespeicherten Sicherungscodes erfolgt.

6. Einrichtung zur Sicherung eines Videorekorders und/oder mit diesem Videorekorder verwendeter Magnetbandkassetten gegen unberechtigte Benutzung, bestehend aus einer Bedieneinheit zur Eingabe eines Sicherungs codes, einem nichtflüchtigen Speicher zur Speicherung des Sicherungscodes und einem Mikrocomputer zur Steuerung des Videorekorders und zum Vergleich eines eingegebenen Sicherungscodes mit dem gespeicherten Sicherungscode
**dadurch gekennzeichnet,**
daß eine Aufzeichnungs- und Wiedergabeeinrichtung zur Aufzeichung und Wiedergabe des Sicherungscodes auf und von den Magnetbandkassetten vorgesehen sind, daß der Mikrocomputer den Sicherungscode des nichtflüchtigen Speichers und den Sicherungscode der jeweils verwendeten Magnetbandkassette, und bei Fehlen eines Sicherungscodes auf der Magnetbandkassette den jeweils manuell mittels Bedieneinheit eingegebenen Sicherungscode überprüft und nur bei Übereinstimmung die Bearbeitung der Magnetbandkassette freigibt.

7. Einrichtung nach Anspruch 6,
**dadurch gekennzeichnet,**
daß zusätzliche Sicherungscodes aufgezeichnet werden können, daß der Mikrocomputer bei Vorhandensein von zusätzlichen Sicherungscodes alle oder bestimmte Betriebsarten, wie Aufzeichnung und Wiedergabe, sperrt und nach der manuellen Eingabe des Sicherungscodes, bei Übereinstimmung mit dem im Videorekorder gespeicherten oder auf der Magnetbandkassette aufgezeichneten Sicherungscode freigibt.

8. Einrichtung nach Anspruch 7,
**dadurch gekennzeichnet**,
daß der Mikrocomputer alle Betriebsarten, auch bei nicht vorhandenem oder nicht übereinstimmenden Sicherungscodes, freigibt und lediglich bei Vorhandensein der zusatzlichen Sicherungscodes die durch diese zusätzlichen Sicherungscodes gesperrten Betriebsarten sperrt.

9. Einrichtung nach einem der Anspruche 6 bis 8,
**dadurch gekennzeichnet,**
daß eine Betriebsart zum nachträglichen Aufzeichnen des Sicherungscodes und/oder des zusätzlichen Sicherungscodes vorgesehen ist.

10. Einrichtung nach einem der Anspruche 6 bis 9,
**dadurch gekennzeichnet,**
daß die Einrichtung zur Aufzeichung und Wiedergabe der Sicherungscodes auf und von den Magnetbandkassetten nach dem VITC-Verfahren arbeitet.

## Claims

1. Method of securing against unauthorized use of a video recorder and/or of magnetic-tape cassettes used with said video recorder, in which an alphanumerical security code inputted by the user is stored in the video recorder, in which the security code is concomitantly recorded on the magnetic-tape cassettes used during every recording, the security code recorded on the magnetic-tape cassettes is compared with the security code stored in the video recorder prior to every processing of the magnetic-tape cassettes and the further processing is enabled only if the security codes match and in which, if the security code does not match or is absent on the magnetic-tape cassette, the further processing is made possible by the manual inputting of the security code stored in the video recorder.

2. Method according to Claim 1, characterized in that an additional security code can be recorded on the magnetic-tape cassettes and has the effect that certain or all operating modes of the video recorder are disabled, in that the additional security code is valid for the entire magnetic-tape cassette or only for individual, selectable sections of the magnetic-tape cassette, in that a check is made for the presence of the additional security code prior to, and during, any processing of the magnetic-tape cassettes, and in that the operating modes disabled by the additional security code can be enabled by manual inputting of the security code stored in the video recorder.

3. Method according to Claim 2, characterized in that an operating mode is provided in which the comparison of the security code is omitted at the beginning of a processing so that magnetic-tape cassettes without or with non-matching security code can be processed and in that the operating modes disabled by the additional security code can be enabled by manual inputting of the security code stored in the video recorder or on the magnetic-tape cassette.

4. Method according to Claim 2 or 3, characterized in that the operating modes of the video recorder which can be disabled by the additional security codes involve recording and/or playback.

5. Method according to one of Claims 1 to 4, characterized in that the security code and/or the additional security codes can be retrospectively recorded on the magnetic-tape cassettes or changed, a change being made only after the manual inputting of the security code stored in the video recorder or on the magnetic-tape cassette.

6. Device for securing against unauthorized use of a video recorder and/or magnetic-tape cassettes used with said video recorder , comprising an operating unit for inputting a security code, a nonvolatile memory for storing the security code and a microcomputer for controlling the video recorder and for comparing an inputted security code with the stored security code, characterized in that a recording device and playback device are provided for recording and playing back the security code on, and by, the magnetic-tape cassettes, and in that the microcomputer checks the security code of the nonvolatile memory and the security code of the magnetic-tape cassette respectively used and, if a security code is absent on the magnetic-tape cassette, the security code manually inputted in a particular case by means of the operating unit and enables the processing of the magnetic-tape cassette only if there is matching.

7. Device according to Claim 6, characterized in that additional security codes can be recorded and in that, if additional security codes are present, the microcomputer disables all or certain operating modes, such as recording and playback and, after the manual inputting of the security code, enables them if the additional security code matches the security code stored in the video recorder or recorded on the magnetic-tape cassette.

8. Device according to Claim 7, characterized in that the microcomputer enables all operating modes even if security codes are not present or do not match and only disables the operating modes disabled by said additional security codes if the additional security codes are present.

9. Device according to one of Claims 6 to 8, characterized in that an operating mode is provided for retrospectively recording the security code and/or the additional security code.

10. Device according to one of Claims 6 to 9, characterized in that the device for recording and playing back the security codes on, or by, the magnetic-tape cassettes employs the VITC method.

## Revendications

1. Procédé de protection contre une utilisation non autorisée d'un magnétoscope et/ou de cassettes à bande magnétique utilisées avec ce magnétoscope, selon lequel un code alphanumérique de sécurité introduit par l'utilisateur est mémorisé dans le magnétoscope, et selon lequel lors de chaque enregistrement, le code de sécurité est enregistré conjointement sur les cassettes à bande magnétique utilisées, et avant chaque traitement des cassettes à bande magnétique, le code de sécurité enregistré sur les cassettes à bande magnétique est comparé au code de sécurité mémorisé dans le magnétoscope, et la suite du traitement est libéré uniquement dans le cas où les codes de sécurité coïncident, et qu'en cas de non coïncidence ou en cas d'absence du code de sécurité sur la cassette à bande magnétique, la poursuite du traitement est possible au moyen de l'introduction manuelle du code de sécurité mémorisé dans le magnétoscope.

2. Procédé selon la revendication 1, caractérisé en ce qu'on peut enregistrer, sur les cassettes à bande magnétique, un code supplémentaire de sécurité, que certains types de fonctionnement ou tous les types de fonctionnement du magnétoscope sont bloqués, que le code supplémentaire de sécurité pour l'ensemble de la cassette à bande magnétique ou uniquement pour des parties, pouvant être sélectionnées individuellement, de la cassette à bande magnétique est valable, qu'avant et pendant chaque traitement des cassettes à bande magnétique, un contrôle de la présence du code supplémentaire de sécurité est exécuté et que les types de fonctionnement, qui sont bloqués par le code supplémentaire de sécurité, peuvent être libérés par introduction manuelle du code de sécurité mémorisé dans le magnétoscope.

3. Procédé selon la revendication 2, caractérisé en ce qu'il est prévu un type de fonctionnement, dans lequel la comparaison des codes de sécurité au début d'un traitement est supprimé de sorte que l'on peut traiter des cassettes à bande magnétique ne comportant pas ou comportant un code de sécurité non coïncident, et que les types de fonctionnement bloqués par le code supplémentaire de sécurité peuvent être libérés par l'introduction manuelle du code de sécurité mémorisé dans le magnétoscope ou dans la cassette à bande magnétique.

4. Procédé selon la revendication 2 ou 3, caractérisé en ce qu'en ce qui concerne les types de fonctionnement du magnétoscope, pouvant être bloqués par les codes supplémentaires de sécurité, il s'agit d'un enregistrement et/ou d'une reproduction.

5. Procédé selon l'une des revendications 1 à 4, caractérisé en ce que le code de sécurité et/ou les codes supplémentaires de sécurité peuvent être enregistrés ou modifiés ultérieurement dans les cassettes à bande magnétique, auquel cas une modification s'effectue uniquement après introduction manuelle du code de sécurité mémorisé dans le magnétoscope ou sur la cassette à bande magnétique.

6. Dispositif pour protéger un magnétoscope et/ou des cassettes à bande magnétique utilisées avec ce magnétoscope, vis-à-vis d'une utilisation non autorisée, constitué par une unité de commande servant à introduire un code de sécurité, une mémoire non volatile pour mémoriser le code de sécurité et un micro-ordinateur pour commander l'enregistrement vidéo et pour comparer un code de sécurité introduit au code de sécurité mémorisé, caractérisé en ce qu'un dispositif d'enregistrement et un dispositif de reproduction servant à enregistrer et reproduire le code de sécurité sur et à partir des cassettes à bande magnétique sont prévus, que le micro-ordinateur contrôle le code de sécurité de la mémoire non volatile et le code de sécurité de la cassette à bande magnétique respectivement utilisée et, en cas d'absence d'un code de sécurité dans la cassette à bande magnétique, le code de sécurité introduit respectivement manuellement à l'aide d'une unité de commande, et libère le traitement de la cassette à bande magnétique uniquement en cas de coïncidence.

7. Dispositif selon la revendication 6, caractérisé en ce que l'on peut enregistrer des codes supplémentaires de sécurité, et que dans le cas de présence de codes supplémentaires de sécurité, le micro-ordinateur bloque tous les types de fonctionnement ou certains types de fonctionnement, tel que l'enregistrement et la reproduction, et libère ces types de fonctionnement uniquement après l'introduction manuel du code de sécurité, en cas de coïncidence avec le code de sécurité mémorisé dans le magnétoscope ou enregistré dans la cassette à bande magnétique.

8. Dispositif selon la revendication 7, caractérisé en ce que le micro-ordinateur libère tous les types de fonctionnement, même dans le cas de l'absence ou de la non concordance des codes de sécurité, et bloque les types de fonctionnement bloqués par les codes supplémentaires de sécurité, uniquement dans le cas de la présence de ces codes supplémentaires de sécurité.

9. Dispositif selon l'une des revendications 6 à 8, caractérisé en ce qu'il est prévu un type de fonctionnement pour enregistrer ultérieurement le code de sécurité et/ou le code supplémentaire de sécurité.

10. Dispositif selon l'une des revendications 6 à 9, caractérisé en ce que le dispositif d'enregistrement et de reproduction des codes de sécurité sur et à partir des cassettes à bande magnétique travaille selon le procédé VITC.
